**Europäisches Patentamt**

**European Patent Office**

**Office européen des brevets**

(19)

(11) Veröffentlichungsnummer: **0 072 984**
**A1**

## (12) EUROPÄISCHE PATENTANMELDUNG

(21) Anmeldenummer: **82107348.3**

(22) Anmeldetag: **13.08.82**

(51) Int. Cl.³: **H 04 H 3/00**
**H 04 B 7/26**

(30) Priorität: **21.08.81 DE 3133120**

(43) Veröffentlichungstag der Anmeldung:
**02.03.83 Patentblatt 83/9**

(84) Benannte Vertragsstaaten:
**AT CH DE LI NL**

(71) Anmelder: **Licentia Patent-Verwaltungs-GmbH**
**Theodor-Stern-Kai 1**
**D-6000 Frankfurt/Main 70(DE)**

(72) Erfinder: **Nedtwig, Joachim**
**Donauhalde 22**
**D-7900 Ulm(DE)**

(74) Vertreter: **Schickle, Gerhard, Dipl.-Ing. et al,**
**Licentia Patent-Verwaltungs-GmbH Theodor-Stern-Kai**
**1**
**D-6000 Frankfurt/Main 70(DE)**

(54) **Verfahren zum automatischen Ermitteln eines Laufzeitausgleichs in einem Gleichwellenfunknetz.**

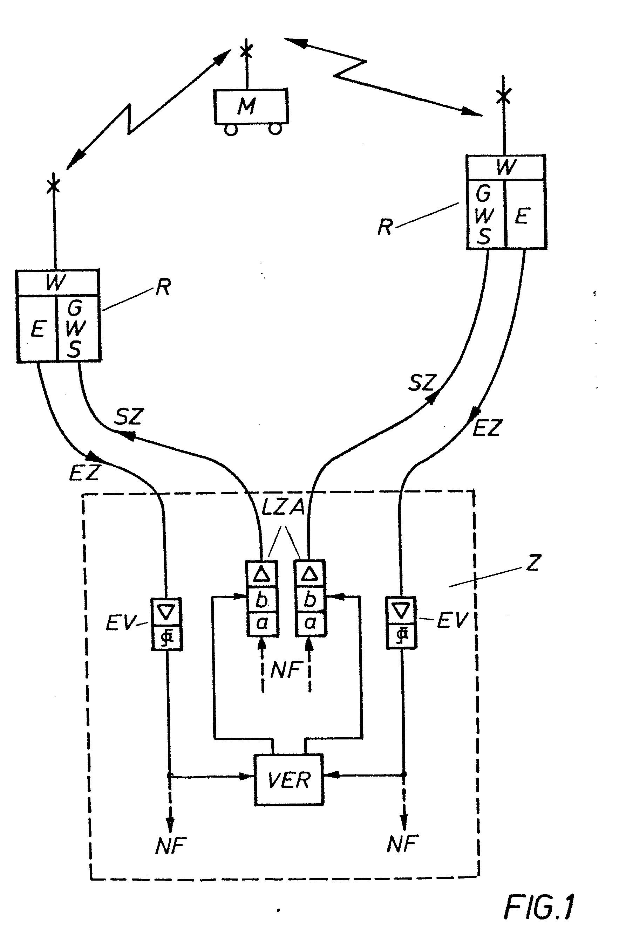

(57) Verfahren zum automatischen Ermitteln eines Laufzeitausgleichs in einem Gleichwellenfunknetz. Es sollen auch die HF-Wege zwischen mobilen Sende-/Empfangsgeräten (M) und Relaisstellen (R) beim Laufzeitausgleich berücksichtigt werden. Dazu sendet das mobile Sende-/Empfangsgerät (M) Steuer- und Abgleichsignale aus, die in der Zentrale (Z) in einer Vergleichseinrichtung (VER) zeitlich verglichen werden. Auf Grund des Vergleichsergebnisses werden automatisch Laufzeitglieder (LZA) in den Sendewegen (SZ) eingestellt. Bei Verbindungsaufnahme durch die Zentrale (Z) werden zunächst die Relaisstellen in RS1-Schaltung getastet und von der Zentrale Steuer- und Abgleichsignale über die Sendewege (SZ) geschickt, über die Empfangswege (EZ) empfangen, in der Vergleichseinrichtung (VER) zeitlich verglichen, und die Laufzeitglieder (LZA) eingestellt. Diese Einstellung kann auch also Grundeinstellung der Laufzeitglieder (LZA) verriegelt werden. Bei Wählleitungen als Modulationszubringer müssen zunächst die Sendewege (SZ) und dann die Empfangswege (EZ) abgeglichen werden (FIG. 1).

FIG.1

- 1 -

Licentia Patent-Verwaltungs-GmbH          Z13 PTL-UL/Bl/hä
Theodor-Stern-Kai 1                       UL 78/19
D-6000 Frankfurt 70                       P 31 33 120.3

Verfahren zum automatischen Ermitteln eines Laufzeitausgleichs in einem Gleichwellenfunknetz

Die Erfindung betrifft ein Verfahren nach dem Oberbegriff des Anspruchs 1.

Für die einwandfreie Funktion eines Gleichwellennetzes,
insbesondere für die Sprachverständlichkeit, ist die
gleichzeitige und phasenrichtige Aussendung der Information Bedingung. Die Gleichwellensender erhalten die Information von einer Zentrale über unterschiedliche Wege,
wie Drahtleitungen oder Funkzubringer. Dabei erhalten
die Nachrichten unterschiedliche Laufzeitverzögerungen.
Diese werden nach dem Stand der Technik für jeden Weg
ermittelt und noch weitgehend zum Ausgleich Laufzeitnachbildungen fest eingebaut.

Aus der GB-OS 20 01 230 ist ein Gleichwellensendernetz
bekannt, bei dem Informationen einen Empfänger über

...

verschiedene, umschaltbare Wege erreichen können. In der Zentrale sind alle möglichen, also einmal ermittelten, Laufzeiten abgespeichert; diese werden bei Umschalten von Übertragungswegen abgerufen und steuern Eimerkettenschaltungen als variablen Laufzeitausgleich an.

Es ist bereits vorgeschlagen worden (vgl. deutsche Patentanmeldung P 30 22 425.0), daß die Zentrale und die Nebenstellen, welche die Gleichwellensender enthalten, einen Zeitzeichensender empfangen, daß die Zentrale nach dem Anwählen eines Verbindungsweges zum Zeitzeichen synchrone Schwingungspakete aussendet, die Nebenstellen diese wiederum mit dem Zeitzeichen vergleichen und das Ergebnis an die Zentrale zurückmelden, woraufhin die Zentrale den Nebenstellen die einzustellenden Verzögerungszeiten für den Laufzeitausgleich mitteilt.

Es ist auch bereits vorgeschlagen worden, vgl. deutsche Patentanmeldung P 30 20 176.4, die Nachrichten in den Gleichwellensendern zu verzögern oder zu speichern für eine Wartezeit, bis die längstmögliche Laufzeit der Nachrichten von der Zentrale zu den Gleichwellensendern verstrichen ist. Anschließend werden die Nachrichten auf ein Taktsignal hin synchron von den Gleichwellensendern ausgestrahlt. Das Taktsignal kann beispielsweise vom Empfang des Senders DCF 77 abgeleitet werden.

Aufgabe der Erfindung ist es, ein Verfahren zum automatischen Ermitteln eines Laufzeitausgleichs in einem Gleichwellenfunknetz anzugeben. Dabei soll auch der Übertragungsweg zwischen einer mobilen Sende-/Empfangssta-tion und den Gleichwellensendern berücksichtigt werden.

Die Erfindung ist im Patentanspruch 1 beschrieben. Die weiteren Ansprüche beinhalten vorteilhafte Weiterbildungen

. . .

bzw. Ausführungen der Erfindung.

Die Erfindung wird im folgenden anhand der Figuren näher erläutert.

FIG. 1 zeigt ein Blockschaltbild für ein Gleichwellen- funknetz, das nach dem erfindungsgemäßen Verfahren arbeitet. Dabei ist angenommen, daß der Empfangsweg und der Sendeweg eines Modulationszubringers jeweils gleich lang ist.

FIG. 2 zeigt ein weiteres Blockschaltbild, wobei angenommen ist, daß sämtliche Empfangs- und Sendewege von unterschiedlicher unbekannter Länge sind.

Gemäß FIG. 1 weise ein Gleichwellenfunknetz eine Zentrale Z, mobile Sende-/Empfangsgeräte M, sowie Relaisstellen R mit Gleichwellensendern GWS und Empfangsgeräten E für die Gegenrichtung auf. Zentrale Z und Relaisstellen R sind über Modulationszubringer mit Sendewegen SZ und Empfangswegen EZ verbunden. Diese können Funkzubringer oder Leitungen, oder beides gemischt sein, fest geschaltet oder anwählbar. Zunächst sei jedoch angenommen, daß auf jedem Modulationszubringer der Sendeweg SZ und der Empfangsweg EZ gleiche Laufzeit haben.

Nimmt nun ein mobiles Sende-/Empfangsgerät M Funkkontakt mit der Zentrale auf, so sendet es zunächst Steuer- und Abgleichsignale aus, z. B. digitale Testsignale. Diese werden in der Zentrale über die Empfangswege EZ empfangen und durchlaufen Entzerrerverstärker EV. Anschließend werden sie in einer Vergleichseinrichtung VER zeitlich miteinander verglichen. Auf Grund des Vergleichsergebnisses werden dann Laufzeitglieder LZA in den einzelnen

...

Sendewegen automatisch eingestellt. Diese berücksichtigen somit auch die HF-Wege zwischen mobilem Gerät M und den Relaisstellen R.

Wird eine Funkverbindung von der Zentrale Z eingeleitet, so muß zunächst eine Grundeinstellung der Laufzeitglieder LZA vorgenommen werden. Für diesen Vorgang schaltet die Zentrale die Relaisstellen R in RS1-Schaltung und sendet Steuer- und Abgleichsignale über alle Sendewege SZ, die auf allen Empfangswegen EZ wieder empfangen und in der Vergleichseinrichtung VER zeitlich verglichen werden. Mit dem Vergleichsergebnis können die Laufzeitglieder LZA automatisch eingestellt werden, so daß nun die Sendewege SZ abgeglichen sind. Sobald ein gerufenes mobiles Gerät sich meldet, kann wieder, wie oben beschrieben, verfahren und der HF-Weg zusätzlich berücksichtigt werden.

Bei Modulationszubringern, die über längere Zeiträume fest geschaltet bleiben ist es vorteilhaft, eine Grundeinstellung für die Laufzeitglieder LZA einmal zu ermitteln und zu verriegeln. Vorzugsweise kann diese Grundeinstellung dann nur mit einem wählbaren Code entriegelt werden, um sie z. B. bei Änderung der Zubringerwege neu einzustellen. Die Grundeinstellung der Laufzeitglieder LZA wird sinnvollerweise auch bei Gruppen- und Sammelrufen verwendet.

Für den allgemeinsten Fall frei wählbarer Modulationszubringerwege, z. B. Wählleitungen der Post, kann man nicht mehr davon ausgehen, daß Sendeweg SZ und Empfangsweg EZ gleich lang sind. Dann muß einer dieser Wege absolut bestimmt werden, vorzugsweise der Sendeweg. Dies kann nach einer der bereits vorgeschlagenen Methoden

. . .

UL 78/19 **0072984**

geschehen, vgl. die oben erwähnten deutschen Patentanmeldungen P 30 20 176 und P 30 22 425.

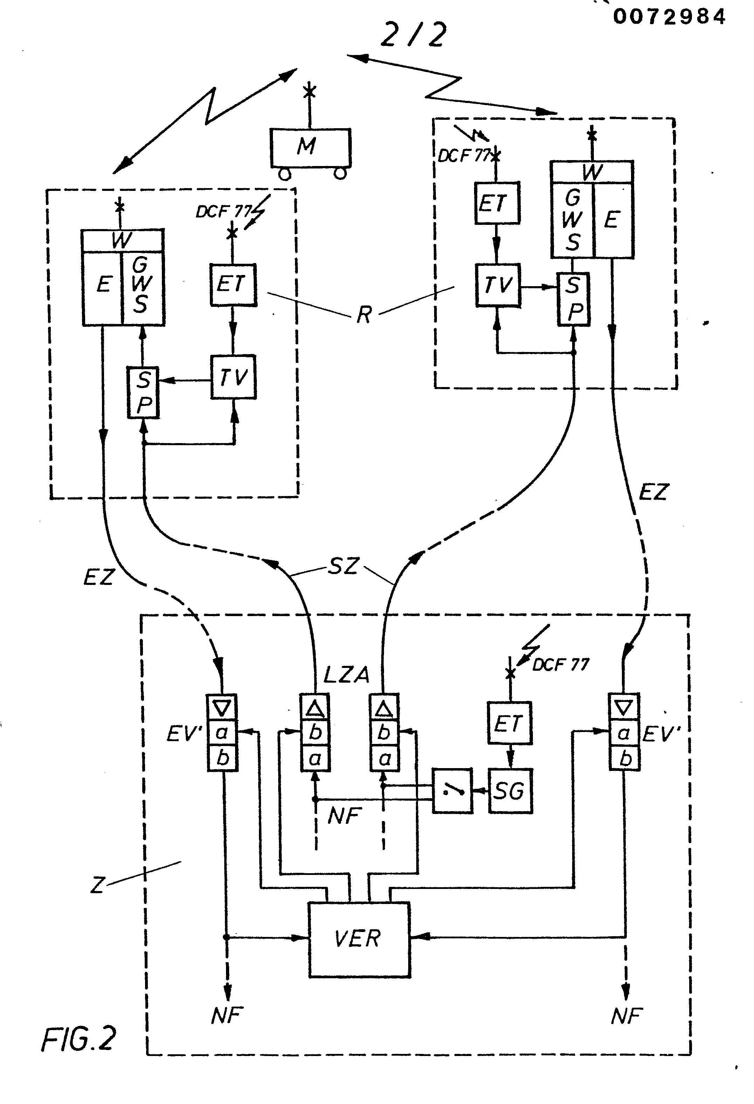

FIG. 2 zeigt ein Blockschaltbild für ein Gleichwellenfunknetz mit Wählverbindungen als Modulationszubringer. In diesem Ausführungsbeispiel weisen die Zentrale Z und die Relaisstellen R je einen Empfänger und Taktgenerator ET auf, welche den Zeitzeichensender DCF 77 empfangen und aus dem empfangenen Signal synchrone Taktimpulsfolgen ableiten. Sobald bei Einleitung einer Funkverbindung von der Zentrale Z oder den Relaisstellen R aus Leitungen angewählt und durchgeschaltet worden sind, wird in der Zentrale auf einen Taktimpuls hin ein Signalgenerator SG angesteuert, welcher Steuer- und Abgleichsignale über die Sendewege SZ sendet. Die Steuer- und Abgleichsignale werden in den Relaisstellen R empfangen und in einem Vergleicher TV mit dem nächsten Taktimpuls zeitlich verglichen. Auf Grund des Vergleichsergebnisses wird dann die Verzögerungszeit von Speicher- oder Verzögerungseinrichtungen SP derart eingestellt, daß die Gesamtlaufzeit auf den Sendewegen SZ genau dem Abstand zwischen zwei Taktimpulsen entspricht. Die Sendewege sind damit abgeglichen.

In einem nächsten Schritt tastet die Zentrale Z die Relaisstellen in RS1-Schaltung und schickt wieder Steuer- und Abgleichsignale über die Sendewege SZ, die sie über die Empfangswege EZ empfängt und in der Vergleichseinrichtung VER zeitlich vergleicht. Auf Grund des Vergleichsergebnisses werden die Empfangswege EZ mittels einstellbarer Verzögerungsglieder EV' auf gleiche Laufzeit gebracht.

...

Nach Verbindungsaufnahme mit einem mobilen Sende-/ Empfangsgerät M sendet dieses wieder, wie oben beschrieben, Steuer- und Abgleichsignale aus, die in der Vergleichseinrichtung VER zeitlich verglichen werden. So kann durch Einstellung der Laufzeitglieder LZA der HF-Weg wieder zusätzlich berücksichtigt werden.

. . .

- 7 -

Licentia Patent-Verwaltungs-GmbH      Z13 PTL-UL/Bl/hä
Theodor-Stern-Kai 1                UL 78/19
D-6000 Frankfurt 70

Patentansprüche

1. Verfahren zum automatischen Abgleich der Phasenlaufzeit in einem Gleichwellenfunknetz mit einer Zentrale, mobilen Sende-/Empfangsgeräten und Relaisstellen mit Gleichwellensendern und Empfangsgeräten für die Gegenrichtung, dadurch gekennzeichnet, daß ein mobiles Sende-/Empfangsgerät (M) Steuer- und Abgleichsignale aussendet, die in der Zentrale (Z) in jedem Empfangsweg (EZ) verstärkt und amplitudenentzerrt werden und anschließend zeitlich miteinander verglichen werden, und daß in der Zentrale (Z) in den zugehörigen Sendewegen (SZ) befindliche variable Laufzeitglieder (LZA) in Ab-hängigkeit vom Vergleichsergebnis automatisch einge-stellt werden (FIG. 1).

2. Verfahren nach Anspruch 1, für den Fall, daß eine Funkverbindung von der Zentrale eingeleitet wird, dadurch gekennzeichnet, daß zunächst die Zentrale (Z)

...

Steuer- und Abgleichsignale über alle Sendewege (SZ) zu
den Relaisstellen (R) aussendet, die Relaisstellen (R)
in RS-1-Schaltung tastet und die Steuer- und Abgleichsignale über alle Empfangswege (EZ) wieder empfängt,
verstärkt, amplitudenentzerrt und zeitlich miteinander
vergleicht, daß in Abhängigkeit vom Vergleichsergebnis
automatisch eine Grobeinstellung der variablen Laufzeitglieder (LZA) vorgenommen wird, daß die Zentrale (Z)
sodann ein mobiles Sende-/Empfangsgerät (M) ruft und
anschließend wie im Anspruch 1 verfahren wird (FIG. 1).

3. Verfahren nach Anspruch 1, dadurch gekennzeichnet,
daß eine Grundeinstellung für die Laufzeitglieder (LZA)
einmal ermittelt und fest eingestellt wird.

4. Verfahren nach Anspruch 3, dadurch gekennzeichnet,
daß die Grundeinstellung nur bei Änderung der Zubringerstrecken auf Grund eines wählbaren Codes verändert wird.

5. Verfahren zum automatischen Abgleich der Phasenlaufzeit in einem Gleichwellenfunknetz mit einer Zentrale,
mobilen Sende-/Empfangsgeräten und Relaisstellen mit
Gleichwellensendern und Empfangsgeräten für die Gegenrichtung, wobei die Modulationszubringer zwischen Zentrale
und Relaisstellen Wählverbindungen unbekannter Länge sind,
gekennzeichnet durch folgende Verfahrensschritte:

- je nach Rufrichtung werden von der Zentrale (Z)
  oder den Relaisstellen (R) Verbindungen angewählt
  und durchgeschaltet;

- durch Vergleich mit einer Zeitmarke, z. B. vom
  Sender DCF 77, werden die Laufzeiten der Sendewege
  (SZ) ermittelt und abgeglichen;

. . .

- die Zentrale (Z) tastet die Relaisstellen (R) in RS1-Schaltung und sendet Steuer- und Abgleichsignale aus, analog zum Verfahren nach Anspruch 2, und gleicht so die Empfangswege (EZ) ab;

- nach Verbindungsaufnahme mit einem mobilen Sende-/ Empfangsgerät (M) wird gemäß Anspruch 1 verfahren, so daß Laufzeitunterschiede auf Grund der HF-Wege als zusätzlicher Laufzeitausgleich auf den Sendewegen (SZ) berücksichtigt werden (FIG. 2).

...

0072984

FIG.1

0072984

FIG.2

**0072984**
Nummer der Anmeldung

**EUROPÄISCHER RECHERCHENBERICHT**

Europäisches
Patentamt

EP 82 10 7348

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | --- <br> EP-A-0 022 453 (LICENTIA) <br> * Seite 2, Zeilen 20-28; Seite 5, Zeilen 1-6 * | 1 | H 04 H 3/00 <br> H 04 B 7/26 |
| A | | 2,3,5 | |
| P,A <br> D | --- <br> EP-A-0 042 144 (LICENTIA) <br><br> * Zusammenfassung; Seite 2, Zeilen 1-4 * & DE - A - 3 022 425 | 1-3,5 | |
| A | --- <br> IEEE TRANSACTIONS ON VEHICULAR TECHNOLOGY, Band VT-28, Nr. 2, Mai 1979, Seiten 117-125, New York, USA <br> G.D. GRAY: "The simulcasting technique: An approach to total-area radio coverage" * Seite 119, rechte Spalte, Zeilen 10-18; Seite 122, linke Spalte, Zeilen 1-42 * | 1-3,5 | |
| A | --- <br> THE RADIO AND ELECTRONIC ENGINEER, Band 50, Nr. 9, September 1980, Seiten 439-446, London, G.B. <br> R.C. FRENCH: "Common channel multi-transmitter data systems" * Abschnitt 5.1 * <br><br> ---     -/- | 1-3,5 | |

RECHERCHIERTE SACHGEBIETE (Int. Cl. 3)

H 04 B
H 04 H

Der vorliegende Recherchenbericht wurde für alle Patentansprüche erstellt.

| Recherchenort <br> DEN HAAG | Abschlußdatum der Recherche <br> 24-11-1982 | Prüfer <br> MIKKELSEN C. |
|---|---|---|

| | Europäisches Patentamt | **EUROPÄISCHER RECHERCHENBERICHT** |
|---|---|---|

## EINSCHLÄGIGE DOKUMENTE — Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | WIRELESS WORLD, Band 86, Nr. 1534, Juni/Juli 1980, Seiten 79-82, Haywards Heath, G.B. W.M. PANNELL: "Extending mobile radio coverage" * Seite 81, mittlere Spalte, Zeile 31 - Seite 82, mittlere Spalte, Zeile 6 * | 1-3,5 | |
| | --- | | |
| D,A | GB-A-2 001 230 (MOTOROLA) * Zusammenfassung; Seite 2, Zeilen 75-105 * | 1,3-5 | |
| | --- | | |
| A | DE-A-2 645 901 (LICENTIA) * Seite 13, Zeilen 11-18 * | 1-3,5 | |
| | ----- | | |

RECHERCHIERTE SACHGEBIETE (Int. Cl. ³)

Der vorliegende Recherchenbericht wurde für alle Patentansprüche erstellt.

| Recherchenort DEN HAAG | Abschlußdatum der Recherche 24-11-1982 | Prüfer MIKKELSEN C. |
|---|---|---|